# EUROPEAN PATENT APPLICATION

(11) **EP 1 088 635 A2**
(43) Date of publication of application: **04.04.2001**
(21) Application number: 00120200.1
(22) Date of filing: 25.09.2000
(51) Int. Cl.: B28B 11/04, C04B 41/50, C03C 8/14

(54) **Method for manufacturing antislip ceramic floor tiles which maintain a glossy and brilliant color and organoleptic appearance substantially identical to wall tiles, and tiles obtained thereby**

(30) Priority: 28.09.1999 IT MO990203
(71) Applicant: Ri-Wal Ceramiche S.p.A., 41042 Fiorano Modenese (Modena) (IT)
(72) Inventor: Ronchetti, Claudio, 41100 Modena (IT)
(74) Representative: Modiano, Guido, Dr.-Ing.

(57) **Abstract**

A method for manufacturing antislip ceramic floor tiles which maintain a glossy and brilliant color and organoleptic appearance which is substantially identical to wall tiles, comprising the steps of applying to an exposed surface of an unfired ceramic backing element at least one layer of glaze or the like for decoration, and firing the glazed backing element in order to produce a stable decorated tile; between the application of the layer of glaze or the like and the firing of the backing element, at least one additional layer of material in the fluid/semifluid state is applied and is kept substantially in suspension on the layer of glaze; the layer of glaze and the layer of fluid/semifluid material are made to mutually bond by chemical reaction during firing and to a limited depth, converting the suspended layer into an optically inert brilliant layer which is rough to the touch.

## Description

The present invention relates to a method for manufacturing antislip ceramic floor tiles which maintain a glossy and brilliant color and organoleptic appearance substantially identical to wall tiles, and to the tiles obtained thereby.

In the manufacture of ceramic tiles there is a growing trend, dictated by market demand, towards providing combinations of decorations and colors which are identical both for wall cladding and for the associated floors.

However, this trend clashes with the requirements of applicable safety standards, which prescribe the specific use, especially in public places or places visited by the public, of antislip materials to cover walking areas, said materials including ceramic tiles.

The contrast between the above-cited requirements arises from the fact that the manufacture of antislip ceramic tiles entails the use of technologies which satisfactorily achieve the antislip result but do not preserve the color and any reflective characteristics that are originally part of the applied decorations.

Accordingly, this problem makes it impossible to meet market trends, since if one combines, during laying, tiles which are identical in decoration and color but are specifically produced separately and designed for floors or walls, these tiles are actually substantially different in their shades and most of all in their glossiness. Accordingly, the effect of color and organoleptic constancy between the floor and the walls which is actually sought intentionally becomes unpleasant.

The aim of the present invention is to solve the above-noted problems of the prior art by providing a method for manufacturing antislip ceramic floor tiles which maintain a glossy and brilliant color and organoleptic appearance substantially identical to wall tiles, and the tiles thus obtained, which allow to provide combinations of identical tiles both for walls and for floors while fully complying with the applicable safety standards.

This aim and other objects are achieved by a method for manufacturing antislip ceramic floor tiles which maintain a glossy and brilliant color and organoleptic appearance substantially identical to wall tiles, comprising the steps of: applying to an exposed surface of an unfired ceramic backing element at least one layer of glaze or the like for decoration; firing said glazed backing element in order to produce a stable decorated tile, characterized in that between the application of the layer of glaze or the like and the firing of said backing element at least one additional layer of material in the fluid/semifluid state is applied, this material being kept substantially in suspension on said layer of glaze; said layer of glaze and said layer of fluid/semifluid material being mutually bonded by chemical reaction during said firing and to a limited depth, converting the suspended layer into an optically inert brilliant layer which is rough to the touch.

Advantageously, the tiles obtained with the above method are characterized in that their exposed surfaces are covered with minute protrusions which protrude stably upwards and are monolithically embedded in the glazed decoration layer.

Further characteristics and advantages of the present invention will become better apparent from the following detailed description of a preferred embodiment of a method for manufacturing antislip ceramic floor tiles which maintain a glossy and brilliant color and organoleptic appearance substantially identical to wall tiles, and to the tiles thus obtained, given hereafter by way of non-limitative example.

The method according to the invention provides for a first step for preparing the tiles according to a conventional method, i.e. by applying a decorative vitreous glaze to the exposed surfaces thereof after a conventional layer of engobe.

In the preferred embodiment of the method, the percentage formulation of the glaze is as follows:
SiO₂ in an amount of 55 to 65% with a preferred value of 59%
Al₂O₃ in an amount of 5 to 13% with a preferred value of 11%
CaO in an amount of 10 to 16% with a preferred value of 12.5%
MgO in an amount of 0,5 to 2% with a preferred value of 1.5%
K₂O in an amount of 1 to 5% with a preferred value of 1.5%
ZnO in an amount of 5 to 10% with a preferred value of 6.5%
Na₂O in an amount of 0 to 3% with a preferred value of 0.3%
ZrO₂ in an amount of 0 to 5% with a preferred value of 3.5%
B₂O₃ in an amount of 0 to 2% with a preferred value of 0.2%
P₂O₅ in an amount of 0 to 5% with a preferred value of 1.5%

The fire waste of this glaze is comprised between 1 and 5% and preferably 2.5%.

An additional layer of material in fluid or semifluid state is then applied over the glaze; this state allows, for this application, to use conventional methods and machines, such as flat or rotary screen-printing, the latter by using either screens or rollers made of silicone and with pre-etched surfaces.

This fluid or semifluid material has, in the preferred embodiment of the method, the following chemical formulation expressed in terms of oxides:
SiO₂ in an amount of 55 to 65% with a preferred value of 63%
Al₂O₃ in an amount of 5 to 13% with a preferred value of 7%
CaO in an amount of 10 to 16% with a preferred value of 14.5%
MgO in an amount of 0,5 to 2% with a preferred value of 1.5%
K₂O in an amount of 1 to 5% with a preferred value of 4%
ZnO in an amount of 5 to 10% with a preferred value of 8%
Na₂O in an amount of 0 to 5% with a preferred value of 0.3%
B₂O₃ in an amount of 0 to 2% with a preferred value of 0.2%

The fire waste of this material is comprised between 1 and 5% and preferably 1.5%.

In the regions where the material in the fluid or semifluid state deposits on the glaze, it remains suspended due to the vitreous characteristics of these two materials.

Once the application of the material has been completed, the ceramic tiles are introduced in the firing kilns, inside which the high temperature triggers a chemical reaction between the surface of the glaze and the base of the additional layer of material applied above, so that the base is embedded in the former only over a fraction of the total thickness.

The excess thickness generates, on firing, stable minute protrusions which protrude from the exposed decorated surfaces of the tiles, without however altering their color shades and gloss, forming the antislip surface of the tiles.

The arrangement of these minute protrusions on the surfaces of the tiles is a consequence of the type of design defined in advance and reproduced by flat or rotary screen printing or by flexographic printing provided by means of elastomeric rollers having pre-etched surfaces and thus can be determined in advance.

In practice it has been observed that the above-described invention achieves the intended aim and objects.

The invention thus conceived is susceptible of numerous modifications and variations, all of which are within the scope of the inventive concept.

All the details may further be replaced with other technically equivalent ones.

In practice, the materials employed, as well as the shapes and the dimensions, may be any according to requirements without thereby abandoning the scope of the protection of the appended claims.

The disclosures in Italian Patent Application No. MO99A000203 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing antislip ceramic floor tiles which maintain a glossy and brilliant color and organoleptic appearance which is substantially identical to wall tiles, comprising the steps of applying to an exposed surface of an unfired ceramic backing element at least one layer of glaze or the like for decoration; firing said glazed backing element in order to produce a stable decorated tile, characterized in that between the application of the layer of glaze or the like and the firing of said backing element at least one additional layer of material in the fluid/semifluid state is applied, said material being kept substantially in suspension on said layer of glaze; causing said layer of glaze and said layer of fluid/semifluid material being mutually bonded by chemical reaction during said firing and to a limited depth, converting the suspended layer into an optically inert brilliant layer which is rough to the touch.

2. The method according to claim 1, characterized in that said glaze and said additional layer have a vitreous base.

3. The method according to claim 1, characterized in that said additional layer is applied by means of a screen-printing process.

4. The method according to claim 1, characterized in that said additional layer is applied by contact with a corresponding distribution roller which has a surface made of smooth or pre-etched elastomeric material.

5. The method according to the preceding claims, characterized in that the chemical structure of said layer of glaze, expressed in terms of oxides, comprises 55 to 65% of SiO₂, 5 to 13% of Al₂O₃, 10 to 16% of CaO, 0.5 to 2% of MgO, 1 to 5% of K₂O, 5 to 10% of ZnO, 0 to 3% of Na₂O, 0 to 5 of ZrO₂, 0 to 2% of B₂O₃, and 0.5 to 5% of P₂O₅.

6. The method according to claim 4, characterized in that the fire waste of said decoration glaze is between 1 and 5%.

7. The method according to the preceding claims, characterized in that the chemical structure of said additional layer of fluid/semifluid material, expressed in terms of oxides, comprises 55 to 65% of SiO₂, 5 to 13% of Al₂O₃, 10 to 16% of CaO, 0.5 to 2% of MgO, 1 to 5% of K₂O, 5 to 10% of ZnO, 0 to 3% of Na₂O, 0 to 5% of ZrO₂, 0 to 2% of B₂O₃.

8. The method according to claim 7, characterized in that said fire waste of said fluid/semifluid material is comprised between 1 and 5%.

9. Ceramic tiles obtained with the method according to the preceding claims, characterized in that their exposed surfaces are covered with minute protrusions which stably protrude upwards and are monolithically embedded in the glazed decorative layer.

10. The tiles according to claim 9, characterized in that said minute protrusions are distributed according to a preset geometric order.
